# EUROPÄISCHE PATENTSCHRIFT

(11) **EP 4 110 974 B1**
(45) Veröffentlichungstag und Bekanntmachung des Hinweises auf die Patenterteilung: **25.12.2024**
(21) Anmeldenummer: 21706545.7
(22) Anmeldetag: 17.02.2021
(51) Int. Cl.: C25D 3/04, C25D 5/00, C25D 3/08, F16J 9/00, C25D 15/02, C25D 7/00, C25D 5/48, C25D 5/18, C25D 5/14, B32B 15/00, B32B 15/01, F16J 9/26

(54) **KOLBENRING MIT HARTCHROMSCHICHT UND VERBESSERTEM EINLAUFVERHALTEN**
PISTON RING HAVING A HARD CHROMIUM LAYER AND IMPROVED RUN-IN BEHAVIOR
SEGMENT DE PISTON AYANT UNE COUCHE DE CHROME DUR ET UN COMPORTEMENT AU RODAGE AMÉLIORÉ

(30) Priorität: 26.02.2020 DE 102020105003
(43) Veröffentlichungstag der Anmeldung: 04.01.2023
(73) Patentinhaber: Federal-Mogul Burscheid GmbH, 51399 Burscheid (DE)
(72) Erfinder: SCHMIDT, Peter, 51399 Burscheid (DE); BALKE, Sabine, 51399 Burscheid (DE); LUEER, Stefan, 40764 Langenfeld (DE)
(74) Vertreter: Müller Schupfner & Partner Patent- und Rechtsanwaltspartnerschaft mbB (Muc)
(86) Internationale Anmeldenummer: PCT/EP2021/053826
(87) Internationale Veröffentlichungsnummer: WO 2021/170460

(56) Entgegenhaltungen:
- EP-A1- 0 909 839
- EP-B1- 0 909 839
- CH-A- 482 110
- CN-A- 101 498 256
- DE-A1- 19 752 720
- DE-U1- 202009 009 206
- US-B1- 6 503 642

## Beschreibung

Die Erfindung betrifft einen Kolbenring mit Hartchromschicht auf der Lauffläche und verbessertem Einlaufverhalten sowie ein Verfahren zur Herstellung eines solchen Kolbenrings und dessen Verwendung in einem Verbrennungsmotor.

Kolbenringe für Verbrennungsmotoren sind starker Reibung und hohen Temperaturen ausgesetzt und müssen daher Oberflächen aufweisen, die eine hohe Verschleiß- und Fressbeständigkeit sowie eine hohe Brandspurfestigkeit aufweisen und darüber hinaus gute Gleiteigenschaften besitzen. Dazu werden in der Regel die äußeren Umfangsflächen (Laufflächen) der Kolbenringe mit Verschleißschutzschichten versehen, beispielsweise in Form von elektrolytisch abgeschiedenen Hartchromschichten.

Zur Verbesserung der Verschleiß- und Fressbeständigkeit können in galvanischen Hartchromschichten Feststoffpartikel eingelagert werden. In der DE 3531410 A1 und der EP 0217126 A1 sind galvanische Hartchromschichten beschrieben, die ein Rissnetzwerk aufweisen und in deren Risse Feststoffpartikel eingelagert sind.

In der DE 197 52 720 A1 ist ein Verfahren zur Herstellung eines Ölabstreifkolbenringes mit mindestens einem an der Zylinderwand anliegenden Steg, wobei auf der äußeren Umfangsfläche eine verschleißfeste Schicht aufgebracht und die Schicht zur Bildung scharfer Kanten an den Stegen geschliffen wird, dadurch gekennzeichnet, dass auf die äußere Umfangsfläche zunächst eine verschleißfeste galvanische Hartchromschicht mit einem durch die gesamte Schichtdicke sich erstreckenden Rissnetzwerk mit in den Rissen eingelagerten Feststoffpartikeln abgeschieden und darauf eine ausbruchsichere Deckschicht aufgebracht wird und danach die scharfen Kanten an den Stegen fertiggeschliffen werden, indem lediglich die ausbruchsichere Deckschicht geschliffen wird.

Die Verschleißfestigkeit solcher Hartchrom-Feststoffpartikel-Schichten ist jedoch so hoch, dass das Einlaufen der Kolbenringe sehr lange dauert, in der Regel 2000 Betriebsstunden oder mehr. In dieser Zeit ist der Verbrennungsmotor störungsanfällig und zeigt einen hohen Ölverbrauch. Dies ist insbesondere bei großen Kolbenringen von Bedeutung, wie sie zum Beispiel in Schiffsmotoren eingesetzt werden. Von großen Kolbenringen spricht man in der Regel bei einem Durchmesser der Kolbenringe von ca. 120 - 1000 mm.

Der vorliegenden Erfindung liegt daher die Aufgabe zugrunde, die oben genannten Nachteile des Standes der Technik zu überwinden und einen Kolbenring bereitzustellen, dessen Einlaufverhalten verbessert ist. Weiter ist es Aufgabe der vorliegenden Erfindung, ein Verfahren zur Herstellung eines solchen Kolbenrings bereitzustellen.

Erfindungsgemäß wird diese Aufgabe gelöst durch einen Kolbenring mit einem Grundkörper, wobei der Grundkörper eine innere Umfangsfläche, eine erste Flankenfläche, eine zweite Flankenfläche und eine äußere Umfangsfläche aufweist, wobei auf der äußeren Umfangsfläche eine erste Hartchromschicht mit einem Rissnetzwerk aufgebracht ist, das Rissnetzwerk der ersten Hartchromschicht eine Rissdichte von 10 - 250 Rissen pro mm beträgt und in die Risse der ersten Hartchromschicht Feststoffpartikel eingelagert sind, die eine mittlere Partikelgröße von 0,01 - 10 µm aufweisen, auf der ersten Hartchromschicht eine zweite Hartchromschicht mit einem Rissnetzwerk aufgebracht ist, wobei die Rissdichte des Rissnetzwerks der zweiten Hartchromschicht 10 - 250 Risse pro mm beträgt und in die Risse der zweiten Hartchromschicht keine Feststoffpartikel eingelagert sind, die Risse an der Oberfläche der zweiten Hartchromschicht eine durchschnittliche Breite von 1 - 15 µm aufweisen, die Risse an der Oberfläche der zweiten Hartchromschicht elektrolytisch aufgeweitet sind und der Oberflächenanteil der Risse an der Oberfläche der zweiten Hartchromschicht 3 - 25 % beträgt, bezogen auf die gesamte Oberfläche der zweiten Hartchromschicht.

Die Aufgabe wird weiter gelöst durch ein Verfahren zur Herstellung eines Kolbenrings, umfassend die Schritte, dass
(a) ein Kolbenring mit einem Grundkörper, der eine innere Umfangsfläche, eine erste Flankenfläche, eine zweite Flankenfläche und eine äußere Umfangsfläche aufweist, in einen Elektrolyten eingebracht wird, der eine Chromverbindung und Feststoffpartikel mit einer durchschnittlichen Partikelgröße von 0,01 - 10 µm enthält,
(b) auf die äußere Umfangsfläche elektrolytisch eine erste Hartchromschicht abgeschieden wird, die ein Rissnetzwerk aufweist,
(c) die Stromrichtung umgekehrt wird, wobei sich gebildete Risse aufweiten und sich die Feststoffpartikel in die Risse einlagern,
(d) die Schritte (b) und (c) mindestens einmal wiederholt werden, so dass sich eine erste Hartchromschicht ausbildet, die Feststoffpartikel in den Rissen enthält,
(e) der Kolbenring in einen Elektrolyten eingebracht wird, der eine Chromverbindung und keine Feststoffpartikel enthält, und auf die erste Hartchromschicht elektrolytisch eine zweite Hartchromschicht abgeschieden wird, die ein Rissnetzwerk aufweist, und
(f) die Stromrichtung umgekehrt wird, wobei sich die gebildeten Risse an der Oberfläche der zweiten Hartchromschicht auf eine durchschnittliche Breite von 1 - 15 µm aufweiten und der Oberflächenanteil der Risse 3 - 25 % beträgt, bezogen auf die gesamte Oberfläche der zweiten Hartchromschicht.

Der oben beschriebene Kolbenring hat den Vorteil, dass er an der Oberfläche Risse aufweist, die aufgeweitet sind und dadurch einen hohen Oberflächenanteil ausmachen, so dass sie als Schmiermittelreservoir fungieren können. Gleichzeitig hat der erfindungsgemäße Kolbenring an der Oberfläche eine partikelfreie Hartchromschicht, die nicht so verschleißfest ist wie die erste Hartchromschicht mit Feststoffpartikeln (Hartchrom-Feststoffpartikel-Schicht), wodurch insgesamt das Einlaufverhalten verkürzt und damit deutlich verbessert wird. Dies reduziert insbesondere den Ölverbrauch in den ersten etwa 2000 Betriebsstunden. Darüber hinaus ist die obere partikelfreie Schicht eine Hartchromschicht, die sich für Kolbenringe als besonders geeignet erwiesen hat. Die obere partikelfreie Hartchromschicht nutzt sich während der Einlaufphase ab, sodass nach dem Einlaufen des Kolbenrings die bekannte, vorteilhafte Hartchrom-Feststoffpartikel-Schicht, d.h. die erste Hartchromschicht ihre Aufgabe als Reibungspartner im Verbrennungsmotor übernehmen kann. Die Schritte (e) und (f) können gegebenenfalls wiederholt werden, eventuell auch mehrfach. Dadurch kann die partikelfreie Hartchromschicht in ihrer Dicke den Anforderungen angepasst werden.

Der grundsätzliche Aufbau eines Kolbenrings mit innerer und äußerer Umfangsfläche sowie Flankenflächen ist beispielsweise in der DE 10 2011 084 052 A1 beschrieben.

Unter einer Hartchromschicht wird im Sinne der Erfindung eine elektrolytisch (galvanisch) aufgebrachte Chromschicht verstanden. Zur Ausbildung der Hartchromschicht wird der Kolbenring in einen Elektrolyten eingebracht und kathodisch geschaltet. Die Ausbildung der Hartchromschicht, mit oder ohne Feststoffpartikel, ist an sich bekannt und beispielsweise in der EP 2 825 682 A1 und der EP 2 260 127 A1 beschrieben.

An den Kolbenring wird ein Gleichstrom oder ein pulsierender Gleichstrom angelegt. Im Abscheidungsschritt (b) bildet sich die Hartchromschicht mit einem Rissnetzwerk (Mikrorissnetzwerk) aus. Da Feststoffpartikel in das Rissnetzwerk eingelagert werden sollen, enthält der Elektrolyt Feststoffpartikel und im Umpolungsschritt (c) wird der Kolbenring anodisch geschaltet und die Risse weiten sich auf, sodass sich die Feststoffpartikel in die aufgeweiteten Mikrorisse einlagern. Die Feststoffpartikel werden dabei bevorzugt im Elektrolyten in der Schwebe gehalten. Bei der Wiederholung der Schritte (b) und (c) werden die Risse im nachfolgenden Abscheidungsschritt (b) verschlossen und es wird eine weitere Lage einer mikrorissigen Hartchromschicht abgeschieden, die wiederum neue Risse aufweist und deren Risse können anschließend aufgeweitet und mit Partikeln gefüllt werden.

Jede Chromschicht (Chromlage) hat vorzugsweise eine Dicke von etwa 6 - 20 µm, und durch mehrfaches Umkehren der Stromrichtung (Umpolen) und Abscheiden kann die Dicke der ersten Hartchromschicht an den gewünschten Einsatzzweck angepasst werden.

Im Anschluss an die Abscheidung der ersten Hartchromschicht wird dann im Schritt (e) eine zweite Hartchromschicht aufgebracht, die keine Feststoffpartikel enthält. Am Ende der Abscheidung wird im Schritt (f) erneut umgepolt (die Stromrichtung umgekehrt) und die Risse an der Oberfläche werden aufgeweitet, sodass sie die angegebene durchschnittliche Breite aufweisen und einen entsprechend hohen Oberflächenanteil ausmachen.

Die durchschnittliche Breite der Risse (Rissbreite) an der Oberfläche der zweiten Hartchromschicht wird bestimmt, indem mindestens von zehn zufällig ausgewählten Rissen in der Oberfläche die Breite gemessen wird, indem in etwa senkrecht zum Rissverlauf gemessen wird, und der arithmetische Mittelwert dieser mindestens zehn gemessenen Rissbreiten ermittelt wird. Zum Ausmessen werden mikroskopische Aufnahmen der Oberfläche verwendet, insbesondere mikroskopische Aufnahmen von Laufflächenschliffen, die wie im Beispiel unten beschrieben hergestellt werden können.

Die durchschnittliche Breite der Risse an der Oberfläche der zweiten Hartchromschicht beträgt 1 - 15 µm, vorzugsweise 1,5 - 12 µm, insbesondere 2 - 10 µm und am meisten bevorzugt 3 - 9 µm.

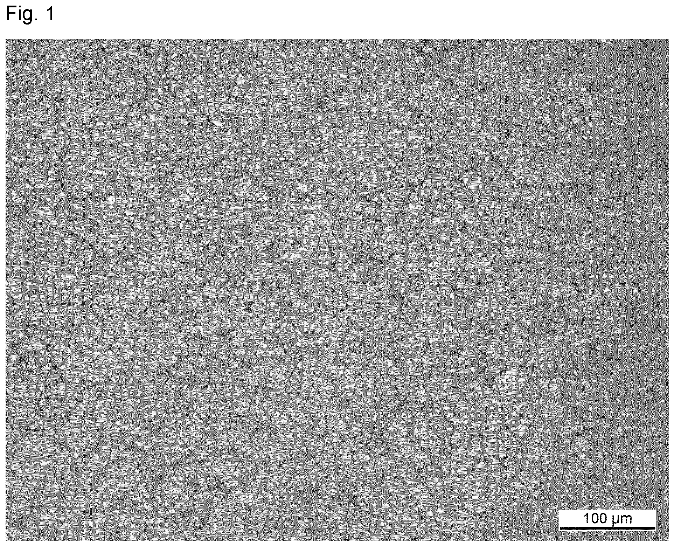

Der Oberflächenanteil der Risse in oder an der Oberfläche der zweiten Hartchromschicht wird ebenfalls anhand von mikroskopischen Aufnahmen der Oberfläche, insbesondere mikroskopischen Aufnahmen von Laufflächenschliffen der Oberfläche ermittelt. Die Risse unterscheiden sich vom Rest der Hartchromschicht in der Färbung, wobei die Risse eine dunklere Färbung aufweisen, wie in Fig. 1 zu sehen ist. Zur Bestimmung des Oberflächenanteils der Risse wird eine Fläche von mindestens 40 µm × 40 µm genommen, und der Anteil der dunklen Färbung, d. h. der Anteil der Risse an der Oberfläche bezogen auf die Gesamtfläche durch Ausmessen bestimmt. Dies wird an mindestens drei zufällig ausgewählten Quadraten von mindestens 40 µm × 40 µm ermittelt, und aus diesen drei Messungen das arithmetische Mittel bestimmt. Der so ermittelte Wert ist der Oberflächenanteil der Risse in der Oberfläche der zweiten Hartchromschicht.

Der Oberflächenanteil der Risse in der Oberfläche der zweiten Hartchromschicht beträgt 3 - 25 %, vorzugsweise 5 - 20 %, insbesondere 6 - 18 %, jeweils bezogen auf die gesamte Oberfläche der zweiten Hartchromschicht.

Die Chromverbindung in dem Elektrolyten zur Abscheidung der Hartchromschicht ist in einer bevorzugten Ausführungsform eine Cr(III)-Verbindung oder eine Cr(VI)-Verbindung, insbesondere eine Cr(VI)-Verbindung. Bevorzugt enthält der Elektrolyt eine Chromverbindung, insbesondere eine Cr(VI)-Verbindung in einer Menge, die 100 - 400 g/l, insbesondere 150 - 300 g/l Chromsäureanhydrid entspricht. Bevorzugt ist es ferner, dass der Elektrolyt 1 - 26 g/l, insbesondere 2 - 25 g/l einer oder mehrerer Säure(n) enthält, z.B. Schwefelsäure und/oder aliphatische Sulfonsäure. Bevorzugt ist eine aliphatische Sulfonsäure mit 1 - 6 Kohlenstoffatomen in dem Elektrolyten, insbesondere in einer Menge von 1 - 18 g/l. Besonders bevorzugt sind aliphatische Sulfonsäuren mit 1 - 4 Kohlenstoffatomen und unter diesen sind Methansulfonsäure, Ethansulfonsäure, Methandisulfonsäure und/oder Ethandisulfonsäure besonders bevorzugt. Am meisten bevorzugt ist Methansulfonsäure. Der Elektrolyt kann darüber hinaus die üblichen Elektrolysehilfsmittel und Katalysatoren enthalten, die die Chromabscheidung unterstützen. Diese können in üblichen Mengen im Elektrolyten vorliegen. Die vorstehend angegebenen Mengen der einzelnen Komponenten im Elektrolyt beziehen sich auf den gesamten Elektrolyten. Um Gusseisen zu verchromen kann der Elektrolyt zudem Fluoride enthalten, z.B. Kaliumfluorid oder Kaliumhexafluorosilikat.

Die Stromdichte in den Abscheidungsschritten (b) und (e) beträgt jeweils bevorzugt 10 - 200 A/dm², besonders bevorzugt 20 - 100 A/dm² und am meistens bevorzugt

40 - 80 A/dm². Die Temperatur kann während der elektrolytischen Abscheidung (galvanische Abscheidung) 20 - 95 °C betragen, bevorzugt 40 - 80 °C die Stromdichte in den Umpolungsschritten (c) und (f) beträgt jeweils vorzugsweise ebenfalls 10 - 200 A/dm², besonders bevorzugt 20 - 100 A/dm² und am meisten bevorzugt 40 - 80 A/dm².

Die Dauer des Umpolungsschrittes (c) beträgt vorzugsweise 30 - 240 s, insbesondere 45 - 120 s. Die Dauer der Aufweitung der Risse im Schritt (f) beträgt vorzugsweise 60 - 300 s, besonders bevorzugt 120 - 240 s.

Die Zeitdauer der Abscheidungsschritte (b) und (e) wird in Abhängigkeit von der gewünschten Dicke der jeweiligen Hartchromschicht gewählt, wobei die Schicht umso dicker wird, je höher die Stromdichte und die Stromausbeute sowie die Abscheidungszeit sind. Unter einer Hartchromschicht wird im Sinne der Erfindung eine galvanisch abgeschiedene Chromschicht verstanden.

Um eine gleichmäßige Verteilung der Feststoffpartikel in der ersten Hartchromschicht zu erreichen, werden die Schritte (b) und (c) wiederholt, wobei sich 1 - 50 Wiederholungen, insbesondere 10 - 30 Wiederholungen als günstig erwiesen haben. Die erste Hartchromschicht hat vorzugsweise eine Schichtdicke von etwa 50 - 300 µm. Bevorzugt sind Schichtdicken von 60 - 200 µm, insbesondere 80 -180 µm.

Da die erste Hartchromschicht Feststoffpartikel enthält, wird diese Schicht im Rahmen dieser Erfindung auch als Hartchrom-Feststoffpartikel-Schicht bezeichnet. Der Grundkörper des Kolbenrings besteht vorzugsweise aus Metall oder einer Metalllegierung, auf die die erste Hartchromschicht unmittelbar abgeschieden wird. Es ist auch möglich, zunächst auf den Grundkörper eine weitere Metallschicht als Grundierung aufzubringen, bevor die erste Hartchromschicht abgeschieden wird. In einer bevorzugten Ausführungsform besteht der Grundkörper des Kolbenrings aus Chromstahl mit mehr als 10 Gewichtsprozent (Gew.-%) Chrom.

Die Schichtdicke der partikelfreien Hartchromschicht, d.h. der zweiten Hartchromschicht beträgt vorzugsweise 5 - 150 µm, besonders bevorzugt 10 - 50 µm. Bevorzugt ist die zweite Hartchromschicht unmittelbar auf die erste Hartchromschicht aufgebracht. Dies bedeutet, dass sich in dieser bevorzugten Ausführungsform zwischen erster und zweiter Hartchromschicht keine weitere Schicht befindet. Auf die zweite Hartchromschicht kann außen gegebenenfalls noch eine Einlaufschicht aufgebracht werden, beispielsweise eine PVD-Schicht oder CVD-Schicht.

Zur Erzielung einer hohen Verschleißbeständigkeit der ersten Hartchromschicht werden als Feststoffpartikel bevorzugt Hartstoffpartikel eingesetzt. Unter Hartstoffpartikeln werden im Sinne der Erfindung Partikel aus Materialien verstanden, die eine Mohs-Härte von 9 oder höher aufweisen. Unter diesen sind Hartstoffpartikel mit einer Mohs-Härte von 9,2 - 10 bevorzugt und solche mit einer Mohs-Härte von 9,4 - 10 besonders bevorzugt. Die Mohs-Härte wird nach der im Stand der Technik bekannten Härteprüfung nach Mohs bestimmt. Besonders bevorzugte Hartstoffpartikel sind solche aus Diamant, Wolframkarbid, Chromkarbid, Aluminiumoxid, Siliziumkarbid, Siliziumnitrid, Borkarbid und/oder kubischem Bornitrid.

Die Menge an Feststoffpartikeln, die in dem Elektrolyten im erfindungsgemäßen Verfahren enthalten ist, kann in weiten Bereichen variiert werden. Dabei hat es sich als vorteilhaft erwiesen, dass im Elektrolyten 0,1 - 200 g/l Feststoffpartikel enthalten sind, insbesondere 1 - 100 g/l.

Ein Rissnetzwerk im Sinne der Erfindung ist das an sich bekannte Rissnetzwerk, das sich bei der elektrolytischen Abscheidung von Chrom ausbildet. Es bilden sich dabei in gewissen Abständen zufällig Risse in der Chromschicht, die bei der nachfolgenden Abscheidung mit Chrom aufgefüllt werden. Die Risse durchziehen die gesamte elektrolytisch abgeschiedene Hartchromschicht in alle Richtungen.

Die Rissdichte der ersten Hartchromschicht und der zweiten Hartchromschicht beträgt jeweils 10 - 250 pro mm, besonders bevorzugt 20 - 220 pro mm, weiter bevorzugt 30 - 200 pro mm und am meisten bevorzugt 40 - 180 pro mm. Zur Ermittlung werden mindestens zwei Schnittlinien von mindestens 1 mm Länge in unterschiedlichen Richtungen über eine mikroskopische Aufnahme eines Laufflächenschliffs gelegt, die Rissdichte durch Auszählung ermittelt und aus diesen mindestens zwei Auszählungen der arithmetische Mittelwert gebildet. Ein Beispiel einer Aufnahme eines geeigneten Laufflächenschliffs ist in Fig. 1 gezeigt.

Durch das Aufweiten der Risse im Schritt (f) nehmen die Risse einen deutlich höheren Oberflächenanteil ein als ohne Aufweiten der Risse und die Risse können Schmiermittel, insbesondere Öl aufnehmen und sorgen so für bessere Gleiteigenschaften des erfindungsgemäßen Kolbenrings und auch für verbesserte Notlaufeigenschaften bei einer etwaig auftretenden Mangelschmierung. Die Risse an der Oberfläche der zweiten Hartchromschicht sind durch das elektrolytische (galvanische) Aufweiten nicht mehr mit Chrom gefüllt, d.h. sie sind offen. Als besonders günstig hat sich ein Oberflächenanteil von 5 - 20% erwiesen, insbesondere 6 - 18%.

Die mittlere Partikelgröße (Korngröße) der Feststoffpartikel beträgt 0,01 - 10 µm, vorzugsweise 0,1 - 3 µm, besonders bevorzugt 0,2 - 2 µm, insbesondere 0,2 - 1 µm. Die durchschnittliche Partikelgröße (d₅₀) wird durch Laserdiffraktion im Trockendispergierer ermittelt (Gerät: Malvern Mastersizer mit Scirocco-Dispersionseinheit). Die mittlere Partikelgröße (d₅₀) ist der Wert, bei dem 50 Vol.-% eine kleinere Partikelgröße aufweisen und 50 Vol.-% eine größere Partikelgröße aufweisen als der angegebene Wert.

Der Anteil der Feststoffpartikel, bezogen auf das Gesamtvolumen der ersten Hartchromschicht, beträgt vorzugsweise 0,1 - 20 Vol.-%, besonders bevorzugt 0,2 - 10 Vol.-%, insbesondere 0,3 - 5 Vol.-%. Die Feststoffpartikel sind bevorzugt gewählt aus der Gruppe bestehend aus Diamant, Wolframkarbid, Chromkarbid, Aluminiumoxid, Siliciumcarbid, Siliciumnitrid, Borcarbid und kubischem Bornitrid.

Die Erfindung betrifft auch die Verwendung des erfindungsgemäßen Kolbenrings in einem Verbrennungsmotor. Dazu wird der erfindungsgemäße Kolbenring in dem Fachmann bekannter Weise in den Kolben eines Verbrennungsmotors eingebracht. Eine bevorzugte Verwendung ist die Verwendung in Schiffsdieselmotoren. Dort werden vorzugsweise Großkolbenringe eingesetzt, die einen Durchmesser von 120 - 1000 mm (Millimeter) aufweisen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Beschrieben wird auch eine mikroskopische Aufnahme eines Laufflächenschliffs einer erfindungsgemäßen Hartchromschicht mit aufgeweiteten Rissen an der Oberfläche.

Die Erfindung wird im nachfolgenden Beispiel näher erläutert, ohne die Erfindung jedoch darauf zu beschränken.

### BEISPIEL

Es wird ein Chromelektrolyt mit folgender Zusammensetzung hergestellt:
250 g/l CrO₃ (Chromsäure)
3,0 g/l H₂SO₄ (Schwefelsäure)
4,2 ml/l Methansulfonsäure

In diesem Chromelektrolyt bei 60°C werden durch Rühren 50 g/l monokristalline Diamantpartikel mit einer durchschnittlichen Partikelgröße von 0,2 bis 0,4 µm dispergiert, während des Verchromens in der Schwebe gehalten und ein Kolbenring aus Chromstahl in den Elektrolyten eingebracht. Der zu verchromende Kolbenring wird zunächst in einer ersten Stufe kathodisch geschaltet und während 10 Minuten bei einer Stromdichte von 60 A/dm³ verchromt. In einer zweiten Stufe wird umgepolt und durch anodische Schaltung des Kolbenrings während 1 Minute bei einer Stromdichte von 60 A/dm³ das Rissnetzwerk der vorher abgeschiedenen Chromschicht aufgeweitet und mit Diamantpartikeln gefüllt. Dieser Zyklus, nämlich 10 min lang kathodisches Verchromen und 1 min lang anodisches Ätzen, wird insgesamt 15-mal wiederholt, wodurch eine Hartchrom-Diamantpartikel-Schicht mit einer Schichtdicke von ca. 120 µm entsteht. Die Rissdichte beträgt etwa 125 Risse pro mm.

Anschließend wird der Kolbenring in einen Elektrolyten mit der gleichen, oben angegebenen Zusammensetzung eingebracht, aber ohne Diamantpartikel und es wird der Kolbenring zunächst kathodisch geschaltet und für 30 min bei einer Stromdichte von 60 A/dm² verchromt. Anschließend wird umgepolt und durch anodische Schaltung des Kolbenrings bei einer Stromdichte von 60 A/dm² das Rissnetzwerk an der Oberfläche aufgeweitet. Die Rissdichte an der Oberfläche beträgt 121 Risse pro mm und die durchschnittliche Breite der Risse 4 µm.

Zur Erstellung einer mikroskopischen Aufnahme der Oberfläche wird ein Laufflächenschliff des Kolbenrings hergestellt. Dazu wird der Kolbenring an der Oberfläche mit SiC-Naßschleifpapier nacheinander mit folgenden Körnungen angeschliffen:

| | |
|---|---|
| Körnung | 220 |
| Körnung | 320 |
| Körnung | 600 |
| Körnung | 1200 |
| Körnung | 4000 |

Das Polieren erfolgt mit einer 1µm-Diamantsuspension, bis die Probe kratzerfrei und konturenscharf ist.

Anschließend wird eine mikroskopische Aufnahme der Oberfläche des Lauflächenschliffs erstellt.

## Patentansprüche

1. Kolbenring mit einem Grundkörper, wobei der Grundkörper eine innere Umfangsfläche, eine erste Flankenfläche, eine zweite Flankenfläche und eine äußere Umfangsfläche aufweist und auf der äußeren Umfangsfläche eine erste Hartchromschicht mit einem Rissnetzwerk aufgebracht ist, wobei das Rissnetzwerk der ersten Hartchromschicht eine Rissdichte von 10 - 250 Rissen pro mm beträgt und in die Risse der ersten Hartchromschicht Feststoffpartikel eingelagert sind, die eine mittlere Partikelgröße von 0,01 - 10 µm aufweisen, auf der ersten Hartchromschicht eine zweite Hartchromschicht mit einem Rissnetzwerk aufgebracht ist, wobei die Rissdichte des Rissnetzwerks der zweiten Hartchromschicht 10 - 250 Risse pro mm beträgt, **dadurch gekennzeichnet, dass** in die Risse der zweiten Hartchromschicht keine Feststoffpartikel eingelagert sind, die Risse an der Oberfläche der zweiten Hartchromschicht eine durchschnittliche Breite von 1 - 15 µm aufweisen, die Risse an der Oberfläche der zweiten Hartchromschicht elektrolytisch aufgeweitet sind und der Oberflächenanteil der Risse an der Oberfläche der zweiten Hartchromschicht 3 - 25 % beträgt, bezogen auf die gesamte Oberfläche der zweiten Hartchromschicht, wobei die durchschnittliche Breite der Risse, der Oberflächenanteil der Risse und die Rissdichte anhand mikroskopischer Aufnahmen von Laufflächenschliffen bestimmt werden,
und zur Ermittlung der durchschnittlichen Breite der Risse mindestens von zehn zufällig ausgewählten Rissen in der Oberfläche die Breite gemessen wird, indem in etwa senkrecht zum Rissverlauf gemessen wird, und der arithmetische Mittelwert dieser mindestens zehn gemessenen Rissbreiten ermittelt wird,
des Weiteren zur Bestimmung des Oberflächenanteils der Risse bezogen auf die Gesamtfläche eine Fläche von mindestens 40µm×40µm genommen wird und der Anteil der dunkel gefärbten Risse bestimmt wird, wobei dies an mindestens drei zufällig ausgewählten Quadraten von mindestens 40µm×40µm ermittelt und aus diesen drei Messungen das arithmetische Mittel bestimmt wird,
und wobei zur Ermittlung der Rissdichte mindestens zwei Schnittlinien von mindestens 1 mm Länge in unterschiedlichen Richtungen über eine mikroskopische Aufnahme eines Laufflächenschliffs gelegt werden, die Rissdichte durch Auszählung ermittelt und aus diesen mindestens zwei Auszählungen der arithmetische Mittelwert gebildet wird.

2. Kolbenring nach Anspruch 1, **dadurch gekennzeichnet, dass** die durchschnittliche Breite der Risse an der Oberfläche der zweiten Hartchromschicht 2- 10 µm beträgt und die Rissdichte der zweiten Hartchromschicht 30 - 200 Risse pro mm ist.

3. Kolbenring nach Anspruch 1 oder 2, **dadurch gekennzeichnet, dass** der Oberflächenanteil der Risse an der Oberfläche der zweiten Hartchromschicht 5 - 20% beträgt.

4. Kolbenring nach einem der Ansprüche 1 - 3, **dadurch gekennzeichnet, dass** die Dicke der ersten Hartchromschicht 60 - 200 µm beträgt.

5. Kolbenring nach einem der Ansprüche 1 - 4, **dadurch gekennzeichnet, dass** die Dicke der zweiten Hartchromschicht 5 - 150 µm beträgt.

6. Kolbenring nach einem der Ansprüche 1 - 5, **dadurch gekennzeichnet, dass** der Durchmesser des Kolbenrings 120 - 1000 mm beträgt.

7. Kolbenring nach einem der Ansprüche 1 - 6, **dadurch gekennzeichnet, dass** die Feststoffpartikel aus Diamant, Wolframkarbid, Chromkarbid, Aluminiumoxid, Siliziumkarbid, Siliziumnitrid, Borkarbid und/oder kubischem Bornitrid bestehen.

8. Verfahren zur Herstellung eines Kolbenrings nach einem der Ansprüche 1 - 7, umfassend die Schritte, dass
(a) ein Kolbenring mit einem Grundkörper, der eine innere Umfangsfläche, eine erste Flankenfläche, eine zweite Flankenfläche und eine äußere Umfangsfläche aufweist, in einen Elektrolyten eingebracht wird, der eine Chromverbindung und Feststoffpartikel mit einer durchschnittlichen Partikelgröße von 0,01 - 10 µm enthält,
(b) auf die äußere Umfangsfläche elektrolytisch eine erste Hartchromschicht abgeschieden wird, die ein Rissnetzwerk aufweist,
(c) die Stromrichtung umgekehrt wird, wobei sich gebildete Risse aufweiten und sich die Feststoffpartikel in die Risse einlagern,
(d) die Schritte (b) und (c) mindestens ein Mal wiederholt werden, so dass sich eine erste Hartchromschicht ausbildet, die Feststoffpartikel in den Rissen enthält,
(e) der Kolbenring in einen Elektrolyten eingebracht wird, der eine Chromverbindung und keine Feststoffpartikel enthält, und auf die erste Hartchromschicht elektrolytisch eine zweite Hartchromschicht abgeschieden wird, die ein Rissnetzwerk mit einer Rissdichte von 10 - 250 Rissen pro mm aufweist, und
(f) die Stromrichtung umgekehrt wird, wobei sich die gebildeten Risse an der Oberfläche der zweiten Hartchromschicht auf eine durchschnittliche Breite von 1 - 15 µm aufweiten und der Oberflächenanteil der Risse 3 - 25 % beträgt, bezogen auf die gesamte Oberfläche der zweiten Hartchromschicht.

9. Verwendung eines Kolbenrings nach einem der Ansprüche 1 - 7 in einem Verbrennungsmotor, insbesondere einem Schiffsdieselmotor.

## Claims

1. Piston ring with a base body, wherein the base body has an inner circumferential surface, a first flank surface, a second flank surface and an outer circumferential surface and a first hard chrome layer with a crack network is applied to the outer circumferential surface, wherein the crack network of the first hard chrome layer has a crack density of 10 - 250 cracks per mm and solid particles having an average particle size of 0.01 - 10 µm are embedded in the cracks of the first hard chrome layer, a second hard chrome layer with a crack network is applied to the first hard chrome layer, wherein the crack density of the crack network of the second hard chrome layer is 10 - 250 cracks per mm, **characterized in that** no solid particles are embedded in the cracks of the second hard chrome layer, the cracks on the surface of the second hard chrome layer have an average width of 1 - 15 µm, the cracks on the surface of the second hard chrome layer are electrolytically widened and the surface proportion of the cracks on the surface of the second hard chrome layer is 3 - 25 %, based on the entire surface of the second hard chrome layer, wherein the average width of the cracks, the surface proportion of the cracks and the crack density are determined on the basis of microscopic images of polished running surface sections, and the width of at least ten randomly selected cracks on the surface is measured to determine the average width of the cracks, by measuring approximately perpendicular to the course of the crack, and the arithmetic mean of these at least ten measured crack widths is determined, furthermore, to determine the surface proportion of the cracks in relation to the total area, an area of at least 40µm×40µm is taken and the proportion of dark-colored cracks is determined, wherein this is determined on at least three randomly selected squares of at least 40µm×40µm and the arithmetic mean is determined from these three measurements,
and wherein, to determine the crack density, at least two section lines of at least 1 mm in length are laid in different directions over a microscopic image of a polished running surface section, the crack density is determined by counting and the arithmetic mean is formed from these at least two counts.

2. Piston ring according to claim 1, **characterized in that** the average width of the cracks on the surface of the second hard chrome layer is 2 - 10 µm and the crack density of the second hard chrome layer is 30 - 200 cracks per mm.

3. Piston ring according to claim 1 or 2, **characterized in that** the surface proportion of the cracks on the surface of the second hard chrome layer is 5 - 20%.

4. Piston ring according to one of claims 1 - 3, **characterized in that** the thickness of the first hard chrome layer is 60 - 200 µm.

5. Piston ring according to one of claims 1 - 4, **characterized in that** the thickness of the second hard chrome layer is 5 - 150 µm.

6. Piston ring according to one of claims 1 - 5, **characterized in that** the diameter of the piston ring is 120 - 1000 mm.

7. Piston ring according to one of claims 1 - 6, **characterized in that** the solid particles consist of diamond, tungsten carbide, chromium carbide, aluminium oxide, silicon carbide, silicon nitride, boron carbide and/or cubic boron nitride.

8. Method of manufacturing a piston ring according to one of claims 1 - 7, comprising the steps of
(a) a piston ring with a base body having an inner circumferential surface, a first flank surface, a second flank surface and an outer circumferential surface is placed in an electrolyte containing a chromium compound and solid particles with an average particle size of 0.01 - 10 µm,
(b) a first hard chrome layer with a crack network is electrolytically deposited on the outer circumferential surface,
(c) the current direction is reversed, wherein the cracks formed widen and the solid particles are deposited in the cracks,
(d) steps (b) and (c) are repeated at least once so that a first hard chrome layer containing solid particles in the cracks is formed,
(e) the piston ring is placed in an electrolyte which contains a chromium compound and no solid particles, and a second hard chrome layer is electrolytically deposited on the first hard chrome layer, which has a crack network with a crack density of 10 - 250 cracks per mm, and
(f) the current direction is reversed, wherein the cracks formed on the surface of the second hard chrome layer widen to an average width of 1 - 15 µm and the surface proportion of the cracks is 3 - 25 %, based on the entire surface of the second hard chrome layer.

9. Use of a piston ring according to one of claims 1 - 7 in an internal combustion engine, in particular a marine diesel engine.

## Revendications

1. Segment de piston comprenant un corps de base, le corps de base présentant une face périphérique intérieure, une première face de flanc, une deuxième face de flanc et une face périphérique extérieure, et une première couche de chrome dur avec un réseau de fissures étant appliquée sur la face périphérique extérieure, le réseau de fissures de la première couche de chrome dur ayant une densité de fissures de 10 à 250 fissures par mm et des particules solides étant intercalées dans les fissures de la première couche de chrome dur, lesquelles présentent une taille moyenne de particules de 0,01 à 10 µm, une deuxième couche de chrome dur avec un réseau de fissures étant appliquée sur la première couche de chrome dur, la densité de fissures du réseau de fissures de la deuxième couche de chrome dur étant de 10 à 250 fissures par mm,
**caractérisé en ce qu'**aucune particule solide n'est intercalée dans les fissures de la deuxième couche de chrome dur, les fissures à la surface de la deuxième couche de chrome dur présentent une largeur moyenne de 1 à 15 µm, les fissures à la surface de la deuxième couche de chrome dur sont élargies par électrolyse, et la proportion surfacique des fissures à la surface de la deuxième couche de chrome dur est de 3 à 25 % par rapport à la surface totale de la deuxième couche de chrome dur,
sachant que
la largeur moyenne des fissures, la proportion surfacique des fissures et la densité des fissures sont déterminées à l'aide de prises de vue microscopiques de sections polies de la surface de glissement,
et pour déterminer la largeur moyenne des fissures, on mesure la largeur d'au moins dix fissures choisies au hasard dans la surface, en mesurant à peu près perpendiculairement au tracé des fissures, et on détermine la valeur moyenne arithmétique desdites au moins dix largeurs de fissures mesurées, en outre, pour déterminer la proportion surfacique des fissures par rapport à la surface totale, on prend une surface d'au moins 40 µm × 40 µm et on détermine la proportion des fissures de couleur sombre, ceci se faisant sur au moins trois carrés choisis au hasard d'au moins 40 µm × 40 µm, et on détermine la moyenne arithmétique à partir de ces trois mesures,
et, pour déterminer la densité des fissures, au moins deux lignes de coupe d'une longueur d'au moins 1 mm sont placées dans des directions différentes sur une prise de vue microscopique d'une section polie de la surface de glissement, on détermine par comptage la densité des fissures, et on calcule la moyenne arithmétique à partir desdits au moins deux comptages.

2. Segment de piston selon la revendication 1,
**caractérisé en ce que** la largeur moyenne des fissures à la surface de la deuxième couche de chrome dur est de 2 à 10 µm, et la densité des fissures de la deuxième couche de chrome dur est de 30 à 200 fissures par mm.

3. Segment de piston selon la revendication 1 ou 2,
**caractérisé en ce que** la proportion surfacique des fissures à la surface de la deuxième couche de chrome dur est de 5 à 20 %.

4. Segment de piston selon l'une des revendications 1 à 3,
**caractérisé en ce que** l'épaisseur de la première couche de chrome dur est de 60 à 200 µm.

5. Segment de piston selon l'une des revendications 1 à 4,
**caractérisé en ce que** l'épaisseur de la deuxième couche de chrome dur est de 5 à 150 µm.

6. Segment de piston selon l'une des revendications 1 à 5,
**caractérisé en ce que** le diamètre du segment de piston est de 120 à 1000 mm.

7. Segment de piston selon l'une des revendications 1 à 6,
**caractérisé en ce que** les particules solides sont constituées de diamant, de carbure de tungstène, de carbure de chrome, d'oxyde d'aluminium, de carbure de silicium, de nitrure de silicium, de carbure de bore et/ou de nitrure de bore cubique.

8. Procédé de fabrication d'un segment de piston selon l'une des revendications 1 à 7, comprenant les étapes consistant à
(a) introduire un segment de piston, comprenant un corps de base qui présente une face périphérique intérieure, une première face de flanc, une deuxième face de flanc et une face périphérique extérieure, dans un électrolyte qui contient un composé de chrome et des particules solides ayant une taille moyenne de particules de 0,01 à 10 µm,
(b) déposer par électrolyse sur la face périphérique extérieure une première couche de chrome dur qui présente un réseau de fissures,
(c) inverser le sens du courant, les fissures formées s'élargissant et les particules solides venant s'intercaler dans les fissures,
(d) répéter au moins une fois les étapes (b) et (c), de sorte qu'il se forme une première couche de chrome dur qui contient des particules solides dans les fissures,
(e) introduire le segment de piston dans un électrolyte qui contient un composé de chrome et qui ne contient pas de particules solides, et déposer par électrolyse sur la première couche de chrome dur une deuxième couche de chrome dur qui présente un réseau de fissures avec une densité de fissures de 10 à 250 fissures par mm, et
(f) inverser le sens du courant, les fissures formées à la surface de la deuxième couche de chrome dur s'élargissant à une largeur moyenne de 1 à 15 µm, et la proportion surfacique des fissures étant de 3 à 25 % par rapport à la surface totale de la deuxième couche de chrome dur.

9. Utilisation d'un segment de piston selon l'une des revendications 1 à 7 dans un moteur à combustion interne, en particulier dans un moteur diesel marin.
